# EUROPEAN PATENT SPECIFICATION

(11) **EP 1 457 249 B1**
(45) Date of publication and mention of the grant of the patent: **24.04.2013**
(21) Application number: 04290616.4
(22) Date of filing: 05.03.2004
(51) Int. Cl.: B01D 53/94

(54) **Exhaust-gas purifying catalyst**
Abgasreinigungskatalysator
Catalyseur pour la purification de gaz d'échappement

(30) Priority: 10.03.2003 JP 2003063666; 03.03.2004 JP 2004059524
(43) Date of publication of application: 15.09.2004
(73) Proprietor: Cataler Corporation, Shizuoka 437-1492 (JP)
(72) Inventor: Shirahata, Junya Cataler Corporation, Shizuoka, 437-1492 (JP)
(74) Representative: Novagraaf Technologies

(56) References cited:
- EP-A- 0 337 809
- EP-A- 0 525 677
- US-A- 4 927 799
- US-A- 5 075 276

## Description

### Field of the Invention

The present invention relates to an exhaust-gas purifying catalyst. More specifically, it relates to an exhaust-gas purifying catalyst which uses cerium oxide provided a high O₂ storage ability.

### Description of the Related Art

Exhaust gases emitted from internal combustion engines, such as automobile engines, contain harmful components, such as hydrocarbons (HC), carbon monoxide (CO) and nitrogen oxides (NOₓ) . When exhaust gases including the harmful components are emitted as they are, environmental pollution has occurred or environments have deteriorated. Hence, exhaust gases including the harmful components are emitted after they are purified with exhaust-gas purifying catalysts.

In general, exhaust-gas purifying catalysts are constructed in the following manner. A loading layer is formed on a surface of a catalyst support substrate. The loading layer is composed of heat-resistant inorganic oxides, such as alumina. A catalytic ingredient is loaded on the loading layer. Moreover, depending on the shapes of catalyst support substrates, exhaust-gas purifying catalysts can be divided into monolithic, granular, and pipe-shaped exhaust-gas purifying catalysts. As for the materials of catalyst support substrates, heat-resistant materials are used because catalyst support substrates are exposed to high-temperature exhaust gases. As such materials, it is possible to name ceramics, such as cordierite, heat-resistant metals, such as stainless steels.

A variety of exhaust-gas purifying catalysts capable of purifying the harmful components have been developed recently.

When exhaust gases are purified by exhaust-gas purifying catalysts, the purification of HC are affected strongly by the temperature of exhaust gases. Accordingly, HC are usually purified at a temperature of 300 °C or more. Consequently, when the temperature of exhaust gases is low, such as immediately after engines are started, the catalytic activity of catalytic ingredients is so low that it is difficult to purify HC in exhaust gases. In addition, immediately after starting engines, HC have been emitted abundantly, and have occupied a large proportion of exhaust gases.

Therefore, it is an important issue to suppress the HC emission at low temperatures in the purification of exhaust gases.

In order to deal with the issue, the following exhaust-gas purifying catalysts have been developed as disclosed in the following five patent documents, for example:
Japanese Unexamined Patent Publication (KOKAI) No. 2001-212,464;
National Publication of the Translated Version of PCT Application No. 2000-507,877;
Japanese Unexamined Patent Publication (KOKAI) No. 2000-117,106;
Japanese Unexamined Patent Publication (KOKAI) No. 7-16,460; and
Japanese Unexamined Patent Publication (KOKAI) No. 56-124,442.

Japanese Unexamined Patent Publication (KOKAI) No. 2001-212,464 discloses an exhaust-gas purifying catalyst which comprises an integral structural support, an HC adsorption layer laminated on the integral structural support, and an H₂ generating-NOₓ purifying catalytic layer laminated on the HC adsorption layer. Moreover, the publication discloses to contain a cerium oxide with Pd loaded and a zirconium oxide with Rh loaded in the H₂ generating-NOₓ purifying catalytic layer, respectively, as an HC reforming component and a Co-and-steam reforming component.

National Publication of the Translated Version of PCT Application No. 2000-507,877 discloses a catalytic composition which comprises cerium oxide and zirconium oxide as a first base in a cerium/zirconium atomic proportion of at least 1, and at least one oxide selected from the group consisting of yttrium, lanthanum and praseodymium oxides as a second base. As for the catalytic composition, the publication discloses oxide compositions which are expressed by a chemical formula, CeₓZr_{y}M_{z}O₂.

Japanese Unexamined Patent Publication (KOKAI) No. 2000-117,106 discloses an exhaust-gas purifying catalyst for lean-burn engines, the exhaust-gas purifying catalyst comprising a fire-resistant inorganic oxide with platinum loaded, a cerium-containing oxide with palladium loaded, and an oxide of alkali metals and/or alkaline-earth metals.

Japanese Unexamined Patent Publication (KOKAI) No. 7-16,460 discloses a composite oxide which is applicable to exhaust-gas purifying catalysts. The composite oxide comprises zirconium oxide and a cerium-containing rare-earth element.

Japanese Unexamined Patent Publication (KOKAI) No. 56-124,442 discloses an exhaust-gas purifying catalyst which comprises a support composed of a substrate and a porous layer including zirconium oxide and formed on a surface of the substrate, and a precious metal loaded on the support.

Moreover, in exhaust-gas purifying catalysts, it has been required to further upgrade not only the HC purifying ability but also the other purifying abilities. Thus US Patent 5,075,276, US Patent 4,927,799 and European Patent Application 0 337 809 disclose exhaust-gas purifying catalysts which comprise a catalyst carrier layer formed on a support substrate and catalyst ingredients loaded thereon, and which are capable of ensuring an excellent purification property by suppressing the growth of cerium oxide particles and preventing the formation of LaAlO₃. Such catalyst carrier layers contain as major component alumina but may also comprise as minor components, and preferably at their surface, cerium oxide and zirconium oxide.

### SUMMARY OF THE INVENTION

The present invention has been developed in view of the aforementioned circumstances. It is therefore an object of the present invention to provide an exhaust-gas purifying catalyst which exhibits not only effective purifying performance even in a low temperature region, such as immediately after engines are started, but also enhanced overall purifying performance.

The inventors of the present invention studied the HC purification and exhaust-gas purification in exhaust-gas purifying catalysts over and over again. As a result, they found out that it is possible to achieve the object when exhaust-gas purifying catalysts comprise a loading layer which is formed of cerium oxide having a high O₂ storage ability predominantly. Thus, they completed the present invention.

For example, an exhaust-gas purifying catalyst according to the present invention comprises:
a catalyst support substrate;
a loading layer formed on the catalyst support substrate, and comprising cerium oxide and zirconium oxide in a summed amount of 80% by weight or more with respect to the entire loading layer taken as 100% by weight, or a cerium-zirconium compound in an amount of 80% by weight or more with respect to the entire loading layer taken as 100% by weight, and at least one additive member selected from the group consisting of yttrium, lanthanum, iron and potassium; and
a catalytic ingredient loaded on said loading layer.

The present exhaust-gas purifying catalyst is provided with the loading layer which comprises cerium oxide having a high O₂ storage ability. Therefore, it exhibits a high O₂ storage ability, and is good in terms of the exhaust-gas purifying abilities.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a graph for illustrating the results of measurements on CO conversions which were exhibited by exhaust-gas purifying catalysts according to Example Nos. 1 through 7 as well as Comparative Example Nos. 1 through 4 before they were subjected to a durability test; and
Fig. 2 is a graph for illustrating the results of measurements on CO conversions which were exhibited by the exhaust-gas purifying catalysts according to Example Nos. 1 through 7 as well as Comparative Example Nos. 1 through 4 after they were subjected to a durability test.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present exhaust-gas purifying catalyst comprises a catalyst support substrate, a loading layer, and a catalytic ingredient. In the present exhaust-gas purifying catalyst, the loading layer comprises cerium oxide and zirconium oxide, or a cerium-zirconium compound, and at least one additive member selected from the group consisting of yttrium, lanthanum, iron and potassium. A summed amount of the cerium oxide and the zirconium oxide, or an amount of the cerium-zirconium compound, is 80% by weight or more with respect to the entire loading layer taken as 100% by weight.

When the loading layer comprises cerium oxide and zirconium oxide, or a cerium-zirconium compound, it is possible to construct the loading layer with cerium oxide which is less heat resistant. Specifically, when cerium oxide is exposed to heat of 800 °C or more, it hardly exhibits a specific surface area so that it is difficult to load cerium oxide on catalyst support substrates in a large amount. However, when cerium oxide is loaded on catalyst support substrates in a manner coexisting with zirconium oxide, or when cerium oxide is loaded on catalyst support substrates so as to form a cerium-zirconium compound, it is possible to form the loading layer of the present exhaust-gas purifying catalyst with cerium oxide, because cerium oxide coexisting with zirconium or a cerium-zirconium compound is less likely to exhibit a decreased specific surface area even when it is exposed to heat of 800 °C or more.

When the loading layer comprises the cerium oxide and the zirconium oxide in a summed amount of 80% by weight or more, or the cerium-zirconium compound in an amount of 80% by weight or more, with respect to the entire loading layer taken as 100% by weight, the cerium oxide and zirconium oxide form the loading layer as the major components. It has been known that cerium oxide exhibits a high O₂ storage ability. Accordingly, exhaust-gas purifying catalysts comprising cerium oxide exhibit a high O₂ storage ability. Consequently, the present exhaust-gas purifying catalyst exhibits upgraded purifying performance. Moreover, the zirconium oxide not only inhibits the specific surface area of cerium oxide from decreasing when it coexists with cerium oxide, but also functions to purify exhaust gases. In addition, a cerium-zirconium compound demonstrates advantages of cerium oxide and zirconium oxide simultaneously. As a result, the present exhaust-gas purifying catalyst can show remarkably highly enhanced purifying performance. Note that the summed amount of the cerium oxide and the zirconium oxide, or the amount of the cerium-zirconium compound, can preferably fall in a range of from 80 to 90% by weight, further preferably from 85 to 95% by weight, with respect to the entire loading layer taken as 100% by weight.

The loading layer further comprises at least one additive member selected from the group consisting of yttrium, lanthanum iron and potassium. When the loading layer further comprises an additive member, the present exhaust-gas purifying catalyst exhibits purifying performance fully adapted for purifying exhaust gases. In particular, the additive member improves the CO purifying performance of exhaust-gas purifying catalysts. Note that the content occupied by the additive member in the loading layer is not limited in particular. However, it is preferred that the loading layer can comprise an additive member in an amount of from 1 to 10% by weight, further from 1 to 5% by weight, with respect to the entire loading layer taken as 100% by weight.

The loading layer can preferably comprise cerium oxide and zirconium oxide; and a ratio of the cerium oxide with respect to the zirconium oxide can preferably fall in a range of from 1 : 2 to 5 : 1 by weight. When the weight ratio of the cerium oxide with respect to the zirconium oxide falls within the range, it is especially possible for these oxides to form the loading layer. When the cerium oxide content is less, specifically when the ratio of the cerium oxide with respect to the zirconium oxide is less than 1/2 by weight, the content occupied by the cerium oxide in the loading layer is so less that it is impossible to fully produce the advantage, a high O₂ storage ability, resulting from forming the loading layer of cerium oxide as a major component. On the other hand, when the cerium oxide content is excessive, specifically when the ratio of the cerium oxide with respect to the zirconium oxide is more than 5/1 by weight, the content occupied by the cerium oxide in the loading layer is so excessive that it is impossible to keep a specific surface area as the loading layer. For example, cerium oxide exhibits a small specific surface area. In particular, cerium oxide exhibits a sharply reduced specific surface area when it is heated to 800 °C or more. Note that exhaust-gas purifying catalysts are usually heated by exhaust gases to such a temperature or more.

In the present exhaust-gas purifying catalyst, the cerium-zirconium compound is not limited in particular as far as it is compounds which contain cerium and zirconium. For example, as for the cerium-zirconium compound, it is possible to name cerium-zirconium composite oxides. Moreover, the cerium-zirconium compound can form composite oxides, for instance, cerium-zirconium-yttrium composite oxides, with the additive member. Moreover, the composite oxides can partially form a solid solution therein.

As for the catalyst support substrate, it is possible to use catalyst support substrates which have been used in ordinary exhaust-gas purifying catalysts. As for the catalyst support substrate, for example, it is possible to name monolithic honeycomb-shaped catalyst support substrates which are made of ceramics, such as cordierite, and heat-resistant metals, such as stainless steels.

The loading layer is formed on the catalyst support substrate, and is loaded with a catalytic ingredient. When the loading layer comprises a large number of pores, it is possible to securely provide the loading layer with a large specific surface area. The larger the specific surface area of the loading layer is, the wider the area of the loading layer to be contacted with exhaust gases enlarges. In the present exhaust-gas purifying catalyst, even when the loading layer is formed of cerium oxide with a smaller specific surface as a major component, it is possible for the loading layer to secure a sufficiently large specific surface area for exhaust-gas purifying catalysts as described above.

The catalyst ingredient is loaded on the loading layer, and purifies exhaust gases. As for the catalyst ingredient, it is possible to use catalyst ingredients which have been known conventionally. For instance, it is possible to use at least one member selected from the group consisting of platinum (Pt), palladium (Pd) and rhodium (Rh). The amount of the catalyst ingredient to be loaded on the loading layer is not limited in particular. However, it is preferable to load the catalytic ingredient in an amount of from 0.1 to 10 g, further from 0.1 to 5 g, furthermore from 0.1 to 3 g, with respect to 1 L of the catalyst support substrate.

The production process of the present exhaust-gas purifying catalyst is not limited in particular. However, the present exhaust-gas purifying catalyst can be produced in the following manner, for example.

First, a composite oxide of cerium oxide and zirconium oxide is formed. Then, a slurry is prepared which contains the composite oxide, an additive element and a binder. The resulting slurry is coated on a surface of a catalyst support substrate, and is dried and calcined. Finally, the catalyst support substrate with the slurry coated is immersed into a solution of a catalytic ingredient, and is dried or calcined to complete the present exhaust-gas purifying catalyst. In accordance with such procedures, it is possible to produce the present exhaust-gas purifying catalyst.

Note that, when the loading layer of the present exhaust-gas purifying catalyst is formed by using such a slurry as used in the above-described production process, it is possible to determine the weight proportion, which is occupied by the cerium oxide and zirconium component in the loading layer, by the solid contents in the slurry.

In the present exhaust-gas purifying catalyst, the loading layer is formed of cerium oxide with a high O₂ storage ability as a major component. Accordingly, the loading layer per se exhibits a high O₂ storage ability. Consequently, the present exhaust-gas purifying catalyst demonstrates remarkably enhanced exhaust-gas purifying performance.

### Examples

Hereinafter, the present invention will be described in more detail with reference to specific examples.

As examples of the present invention, the following exhaust-gas purifying catalysts were manufactured as hereinafter described.

### (Example No. 1)

First, a cerium oxide powder was put into a zirconium nitrate solution in such an amount that a ratio of cerium oxide with respect to zirconium oxide was 2 : 1 by weight. After fully stirring the mixture solution, the water content was removed to dry the solid contents. Then, the solid contents were calcined at a heating temperature of from 400 to 700 °C with an electric furnace. Thereafter, the resulting product was fully pulverized to prepare a mixture powder of cerium oxide and zirconium oxide.

Subsequently, a slurry was prepared by putting the mixture powder, an yttrium compound (e.g., yttrium nitrate) and a binder into pure water successively. Note that the binder was an alumina sol which contained alumina in an amount of 10% by weight by conversion into Al₂O₃. Moreover, the mixture powder and the yttrium compound were put into the pure water so as to occupy the thus prepared slurry with a proportion of 90% by weight and 5% by weight, respectively, when the weight of the thus prepared slurry was taken as 100% by weight.

The resultant slurry was coated on a surface of a monolithic honeycomb-shaped catalyst support substrate in an amount of 50 g/m². Note that the catalyst support substrate was made of stainless steel, had a diameter of φ 45 mm and a length of 80 mm, and comprised cells in an amount of 100 cells/inch² approximately. Thereafter, the coated slurry was calcined at 400 °C for 1 hour, thereby forming a loading layer.

Moreover, the loading layer was impregnated with a platinum nitrate aqueous solution, and was dried at 300 °C for 1 hour. In addition, the loading layer was further impregnated with a rhodium nitrate aqueous solution, and was dried at 300 °C for 1 hour. Note that the loading amount of the catalytic ingredients were 1.0 g for platinum and 0.2 g for rhodium with respect to 1 L of the catalyst support substrate, respectively.

In accordance with the above-described procedures, an exhaust-gas purifying catalyst according to Example No. 1 was produced.

### (Example No. 2)

Except that a lanthanum compound (e.g., lanthanum nitrate) was used instead of the yttrium compound, an exhaust-gas purifying catalyst according to Example No. 2 was produced in the same manner as the exhaust-gas purifying apparatus according to Example No. 1.

### (Example No. 3)

Except that a potassium compound (e.g., potassium nitrate) was used instead of the yttrium compound, an exhaust-gas purifying catalyst according to Example No. 3 was produced in the same manner as the exhaust-gas purifying apparatus according to Example No. 1.

### (Example No. 4)

Except that an iron compound (e.g., iron nitrate) was used instead of the yttrium compound, an exhaust-gas purifying catalyst according to Example No. 4 was produced in the same manner as the exhaust-gas purifying apparatus according to Example No. 1.

### (Example No. 5)

First, a cerium oxide powder and an yttrium oxide powder were put into a zirconium nitrate solution in such an amount that a ratio between cerium oxide, zirconium oxide and yttrium oxide was 55 : 40 : 5 by weight. After fully stirring the mixture solution, the water content was removed to dry the solid contents. Then, the solid contents were calcined at a heating temperature of from 400 to 700 °C with an electric furnace. Thereafter, the resulting product was fully pulverized to prepare a mixture powder of cerium oxide, zirconium oxide and yttrium oxide.

Subsequently, a slurry was prepared by putting the mixture powder, a lanthanum compound (e.g., lanthanum nitrate) and a binder into pure water successively. Note that the binder was an alumina sol which contained alumina in an amount of 10% by weight by conversion into Al₂O₃. Moreover, the mixture powder and the lanthanum compound were put into the pure water so as to occupy the thus prepared slurry with a proportion of 90% by weight and 5% by weight, respectively, when the weight of the thus prepared slurry was taken as 100% by weight.

The resultant slurry was coated on a surface of a monolithic honeycomb-shaped catalyst support substrate in an amount of 50 g/m² . Note that the catalyst support substrate was made of stainless steel, had a diameter of φ 45 mm and a length of 80 mm, and comprised cells in an amount of 100 cells/inch² approximately. Thereafter, the coated slurry was calcined at 400 °C for 1 hour, thereby forming a loading layer.

Moreover, the loading layer was impregnated with a platinum nitrate aqueous solution, and was dried at 300 °C for 1 hour. In addition, the loading layer was further impregnated with a rhodium nitrate aqueous solution, and was dried at 300 °C for 1 hour. Note that the loading amount of the catalytic ingredients were 1.0 g for platinum and 0.2 g for rhodium with respect to 1 L of the catalyst support substrate, respectively.

In accordance with the above-described procedures, an exhaust-gas purifying catalyst according to Example No. 5 was produced.

### (Example No. 6)

Except that a potassium compound (e.g., potassium nitrate) was used instead of the lanthanum compound, an exhaust-gas purifying catalyst according to Example No. 6 was produced in the same manner as the exhaust-gas purifying apparatus according to Example No. 5.

### (Example No. 7)

Except that an iron compound (e.g., iron nitrate) was used instead of the lanthanum compound, an exhaust-gas purifying catalyst according to Example No. 7 was produced in the same manner as the exhaust-gas purifying apparatus according to Example No. 5.

### (Comparative Example No. 1)

First, a cerium oxide powder and a zirconium oxide powder were weighed and mixed so that the resultant mixture contained cerium oxide and zirconium oxide in an amount of 70% by weight and 30% by weight, respectively. The mixture was put into an acidic solution (e.g., anitric acid aqueous solution whose pH was 1.5) . After fully stirring the acidic solution, the water content was removed to dry the solid contents. Then, the solid contents were calcined at a heating temperature of from 400 to 700 °C with an electric furnace. Thereafter, the resulting product was fully pulverized to prepare a mixture powder of cerium oxide and zirconium oxide.

Subsequently, a slurry was prepared by putting the mixture powder, an alumina powder (e.g., α -alumina), a lanthanum compound (e.g., lanthanum nitrate) and a binder into pure water successively. Note that the binder was an alumina sol which contained alumina in an amount of 10% by weight by conversion into Al₂O₃. Moreover, the alumina powder, the mixture powder and the lanthanum compound were put into the pure water so as to occupy the thus prepared slurry with a proportion of 60% by weight, 30% by weight and 5% by weight, respectively, when the weight of the thus prepared slurry was taken as 100% by weight.

The resultant slurry was coated on a surface of a monolithic honeycomb-shaped catalyst support substrate in an amount of 50 g/m². Note that the catalyst support substrate was made of stainless steel, had a diameter of φ 45 mm and a length of 80 mm, and comprised cells in an amount of 100 cells/inch² approximately. Thereafter, the coated slurry was calcined at 400 °C for 1 hour, thereby forming a loading layer.

Moreover, the loading layer was impregnated with a platinum nitrate aqueous solution, and was dried at 300 °C for 1 hour. In addition, the loading layer was further impregnated with a rhodium nitrate aqueous solution, and was dried at 300 °C for 1 hour. Note that the loading amount of the catalytic ingredients were 1.0 g for platinum and 0.2 g for rhodium with respect to 1 L of the catalyst support substrate, respectively.

In accordance with the above-described procedures, an exhaust-gas purifying catalyst according to Comparative Example No. 1 was produced.

Note that the summed amount of cerium oxide and zirconium oxide occupied the entire amount of the loading layer with a lesser proportion in Comparative Example No. 1.

### (Comparative Example No. 2)

Except that the mixture powder and the alumina powder were put into pure water so as to occupy the resulting slurry with a proportion of 60% by weight and 30% by weight, respectively, when the weight of the slurry was taken as 100% by weight, an exhaust-gas purifying catalyst according to Comparative Example No. 2 was prepared in the same manner as Comparative Example No. 1.

Note that the summed amount of cerium oxide and zirconium oxide occupied the entire amount of the loading layer with a lesser proportion in Comparative Example No. 2.

### (Comparative Example No. 3)

A slurry was prepared by putting cerium oxide, an alumina powder and a binder into pure water successively. Note that the binder was an alumina sol which contained alumina in an amount of 10% by weight by conversion into Al₂O₃. Moreover, the alumina powder and the cerium oxide were put into the pure water so as to occupy the thus prepared slurry with a proportion of 60% by weight and 35% by weight, respectively, when the weight of the slurry was taken as 100% by weight.

The resultant slurry was coated on a surface of a monolithic honeycomb-shaped catalyst support substrate in an amount of 50 g/m². Note that the catalyst support substrate was made of stainless steel, had a diameter of φ 45 mm and a length of 80 mm, and comprised cells in an amount of 100 cells/inch² approximately. Thereafter, the coated slurry was calcined at 400 °C for 1 hour, thereby forming a loading layer.

Moreover, the loading layer was impregnated with a platinum nitrate aqueous solution, and was dried at 300 °C for 1 hour. In addition, the loading layer was further impregnated with a rhodium nitrate aqueous solution, and was dried at 300 °C for 1 hour. Note that the loading amount of the catalytic ingredients were 1.0 g for platinum and 0.2 g for rhodium with respect to 1 L of the catalyst support substrate, respectively.

In accordance with the above-described procedures, an exhaust-gas purifying catalyst according to Comparative Example No. 3 was produced.

In Comparative Example No. 3, note that no zirconium components and transition metals (or additive components), such as yttrium, were contained in the loading layer, and that the proportion of the cerium oxide content was less therein.

### (Comparative Example No. 4)

A slurry was prepared by putting cerium oxide and a binder into pure water successively. Note that the binder was an alumina sol which contained alumina in an amount of 10% by weight by conversion into Al₂O₃. Moreover, the cerium oxide was put into the pure water so as to occupy the thus prepared slurry with a proportion of 95% by weight when the weight of the slurry was taken as 100% by weight.

The resultant slurry was coated on a surface of a monolithic honeycomb-shaped catalyst support substrate in an amount of 50 g/m². Note that the catalyst support substrate was made of stainless steel, had a diameter of φ 45 mm and a length of 80 mm, and comprised cells in an amount of 100 cells/inch² approximately. Thereafter, the coated slurry was calcined at 400 °C for 1 hour, thereby forming a loading layer.

Moreover, the loading layer was impregnated with a platinum nitrate aqueous solution, and was dried at 300 °C for 1 hour. In addition, the loading layer was further impregnated with a rhodium nitrate aqueous solution, and was dried at 300 °C for 1 hour. Note that the loading amount of the catalytic ingredients were 1.0 g for platinum and 0.2 g for rhodium with respect to 1 L of the catalyst support substrate, respectively.

In accordance with the above-described procedures, an exhaust-gas purifying catalyst according to Comparative Example No. 4 was produced.

In Comparative Example No. 4, note that the loading layer was formed of cerium oxide as a predominant component.

### (Assessment)

In order to assess the exhaust-gas purifying catalysts according to Example Nos. 1 through 7 and Comparative Example Nos. 1 through 4, the respective exhaust-gas purifying catalysts were subjected to a durability test. Note that the respective exhaust-gas purifying catalysts were examined for the CO conversions before and after the durability test.

The CO conversions were measured in the following manner. The respective exhaust-gas purifying catalysts were mounted on an exhaust system of an actual vehicle equipped with a 4-stroke engine whose displacement was 125 c.c. The engine was driven under the EC-40 mode. While thus running the engine, the respective exhaust-gas purifying catalysts were examined for the conversion of the CO component included in the exhaust gases.

Moreover, the respective exhaust-gas purifying catalysts were subjected to a durability test in which the engine was driven at the full throttle of 5, 000 rpm for 50 hours while the exhaust-gas purifying catalysts were mounted on the exhaust system of the actual vehicle. After the durability test, the exhaust-gas purifying catalysts were examined for the CO conversion as described above.

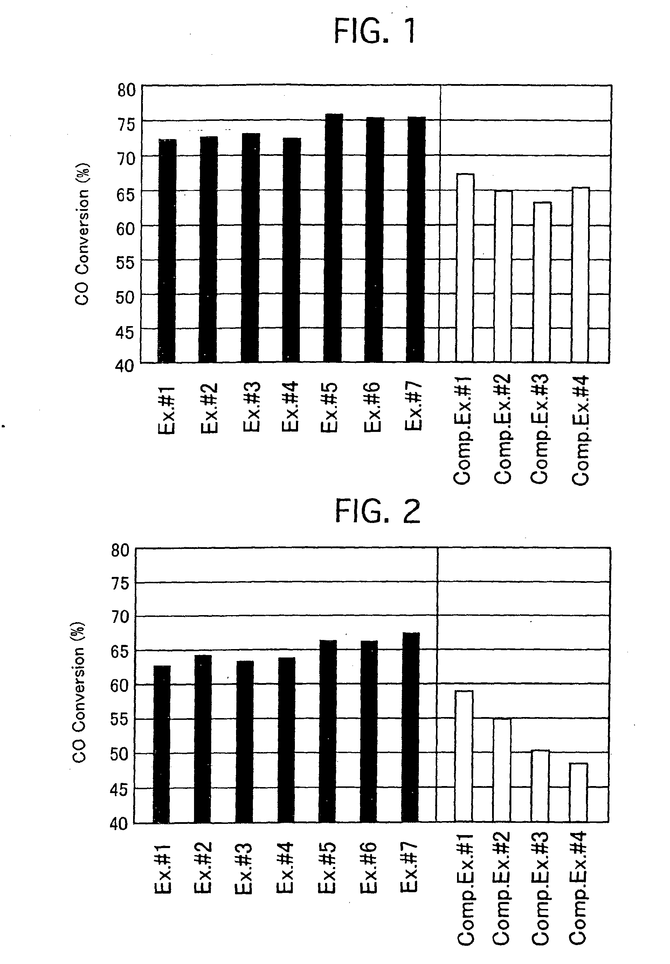

Figs. 1 and 2 illustrate the measurement results on the CO conversions which were exhibited by the respective exhaust-gas purifying catalysts according to Example Nos. 1 through 7 and Comparative Example Nos. 1 through 4.

Fig. 1 illustrates the measurement results on the CO conversions before the durability test. It is seen from Fig. 1 that the exhaust-gas purifying catalysts according to Example Nos. 1 through 7 exhibited a higher CO conversion than the exhaust-gas purifying catalysts according to Comparative Example Nos. 1 through 4 did.

Fig. 2 illustrates the measurement results on the CO conversions after the durability test. It is seen from Fig. 2 as well that the exhaust-gas purifying catalysts according to Example Nos. 1 through 7 exhibited a higher CO conversion even after the durability test than the exhaust-gas purifying catalysts according to Comparative Example Nos. 1 through 4 did.

Specifically, the exhaust-gas purifying catalysts according to Comparative Example Nos. 1 and 2 could not demonstrate the O₂ storage ability of cerium oxide, because the summed amount of cerium oxide and zirconium oxide occupied the entire amount of the loading layer less. The exhaust-gas purifying catalyst according to Comparative Example No. 3 could not demonstrate the O₂ storage ability of cerium oxide, because the loading layer was free from the zirconium components and transition metals (or additive components) , and because the loading layer contained cerium oxide in a small amount. Moreover, the exhaust-gas purifying catalyst according to Comparative Example No. 4 could not demonstrate the O₂ storage ability of cerium oxide, because the loading layer was free from the zirconium components and transition metals (or additive components). In addition, the exhaust-gas purifying catalyst according to Comparative Example No. 4 exhibited a remarkably deteriorated CO conversion especially after the durability, because the specific surface area of cerium oxide had diminished when the exhaust-gas purifying catalyst according to Comparative Example No. 4 was subjected to the durability test.

Having now fully described the present invention, it will be apparent to one of ordinary skill in the art that many changes and modifications can be made thereto without departing from the scope of the present invention as set forth herein the appended claims.

## Claims

1. An exhaust-gas purifying catalyst, comprising:
a catalyst support substrate;
a loading layer formed on the catalyst support substrate, and comprising at least one additive member selected from the group consisting of yttrium, lanthanum, iron and potassium; and
a catalytic ingredient loaded on the loading layer, **characterised in that** the loading layer comprises cerium oxide and zirconium oxide in a summed amount of 80% by weight or more with respect to the entire loading layer taken as 100% by weight, or a cerium-zirconium compound in an amount of 80% by weight or more with respect to the entire loading layer taken as 100% by weight.

2. The exhaust-gas purifying catalyst set forth in claim 1, wherein the loading layer comprises cerium oxide and zirconium oxide; and a ratio of the cerium oxide with respect to the zirconium oxide falls in a range of from 1 : 2 to 5 : 1 by weight.

3. The exhaust-gas purifying catalyst set forth in claim 1, wherein, the summed amount of the cerium oxide and the zirconium oxide, or the amount of the cerium-zirconium compound, falls in a range of from 80 to 90% by weight with respect to the entire loading layer taken as 100% by weight.

4. The exhaust-gas purifying catalyst set forth in claim 1, wherein, the loading layer comprises the additive member in a summed amount of from 1 to 10% by weight with respect to the entire loading layer taken as 100% by weight.

## Patentansprüche

1. Ein Abgasreinigungskatalysator umfassend :
ein Katalysatorträgersubstrat;
eine auf dem Katalysatorträgersubstrat gebildete Beladungsschicht, und umfassend mindestens ein Additiv aus der Gruppe ausgewählt, die aus Yttrium, Lanthan, Eisen und Kalium besteht; und einen katalytischen, auf die Beladungsschicht geladenen Bestandteil, **dadurch gekennzeichnet, dass** die Beladungsschicht Ceroxid und Zirkoniumoxid in einer Gesamtmenge von 80 Gew. % oder mehr bezüglich der gesamten Beladungsschicht als 100 Gew. % genommen, oder eine Cer-Zirkoniumverbindung in einer Menge von 80 Gew. % oder mehr bezüglich der gesamten Beladungsschicht als 100 Gew. % genommen, umfasst.

2. Der Abgasreinigungskatalysator nach Anspruch 1, wobei die Beladungsschicht Ceroxid und Zirkoniumoxid umfasst; und das Verhältnis des Ceroxids bezüglich des Zirkoniumoxids in einem Gewichtsverhältnis in einen Bereich von 1:2 bis 5:1 liegt.

3. Der Abgasreinigungskatalysator nach Anspruch 1, wobei die Gesamtmenge des Ceroxids und des Zikoniumoxids oder die Menge der Cer-Zirkoniumverbindung in einen Bereich von 80 bis 90 Gew.% liegt bezüglich der gesamten Beladungsschicht als 100 Gew.% genommen.

4. Der Abgasreinigungskatalysator nach Anspruch 1, wobei die Beladungsschicht ein Additiv in einer Gesamtmenge von 1 bis 10 Gew. % umfasst bezüglich der gesamten Beladungsschicht als 100 Gew. % genommen.

## Revendications

1. Catalyseur de purification de gaz d'échappement, comprenant:
un substrat de support de catalyseur;
une couche de chargement formée sur le substrat de support de catalyseur, et comprenant au moins un élément additif choisi dans le groupe constitué par l'yttrium, le lanthane, le fer et le potassium ; et
un ingrédient catalytique chargé sur la couche de chargement ;
**caractérisé en ce que** la couche de chargement comprend de l'oxyde de cérium et de l'oxyde de zirconium dans une quantité cumulée de 80% en poids ou plus par rapport à la couche de chargement entière prise comme 100% en poids, ou un composé de cérium et de zirconium dans un quantité de 80% en poids ou plus par rapport à la couche de chargement entière prise comme 100% en poids.

2. Catalyseur de purification de gaz d'échappement selon la revendication 1, dans lequel la couche de chargement comprend de l'oxyde de cérium et de l'oxyde de zirconium, et un rapport de l'oxyde de cérium par rapport à l'oxyde de zirconium se situe dans une plage allant de 1: 2 à 5: 1 en poids.

3. Catalyseur de purification de gaz d'échappement selon la revendication 1, dans lequel, la quantité cumulée de l'oxyde de cérium et l'oxyde de zirconium, ou la quantité de composé de cérium et de zirconium, se situe dans une plage de 80 à 90% en poids par rapport à la couche de chargement entière prise comme 100% en poids.

4. Catalyseur de purification de gaz d'échappement selon la revendication 1, dans lequel, la couche de chargement comprend l'élément additif dans une quantité cumulée de 1 à 10% en poids par rapport à la couche de chargement entière prise comme 100% en poids.
